# EUROPÄISCHE PATENTSCHRIFT

(11) **EP 4 041 615 B1**
(45) Veröffentlichungstag und Bekanntmachung des Hinweises auf die Patenterteilung: **19.02.2025**
(21) Anmeldenummer: 20799611.7
(22) Anmeldetag: 09.10.2020
(51) Int. Cl.: B62D 1/10

(54) **SCHNELLKUPPLUNGSSYSTEM FÜR EIN FAHRZEUGLENKRAD**
QUICK-COUPLING SYSTEM FOR A VEHICLE STEERING WHEEL
SYSTÈME D'ACCOUPLEMENT RAPIDE POUR VOLANT DE VÉHICULE

(30) Priorität: 09.10.2019 DE 202019105567 U
(43) Veröffentlichungstag der Anmeldung: 17.08.2022
(73) Patentinhaber: Endor Aktiengesellschaft, 84034 Landshut (DE)
(72) Erfinder: CONRAD, Bernhard, 84172 Buch am Erlbach (DE)
(74) Vertreter: Grünecker Patent- und Rechtsanwälte PartG mbB
(86) Internationale Anmeldenummer: PCT/DE2020/100878
(87) Internationale Veröffentlichungsnummer: WO 2021/069031

(56) Entgegenhaltungen:
- EP-A1- 1 179 469
- DE-A1- 102015 219 645
- US-A1- 2013 118 297

## Beschreibung

Die Erfindung betrifft ein Schnellkupplungssystem für ein Fahrzeuglenkrad, insbesondere für Rennsportwägen oder auch Simulatoren und Spielkonsolen.

Derartige Schnellkupplungssysteme für Lenkräder werden beispielsweise im Rennsport verwendet, um ein schnelles Ein- und Aussteigen eines Fahrers zu ermöglichen, wofür das Lenkrad abgenommen wird, oder auch um einen schnellen Tausch des Lenkrades bei einem Boxenstopp zu ermöglichen.

Herkömmliche Schnellkupplungssysteme für Lenkräder, wie beispielsweise ein Lenkradschnellverschluss vom Typ QR-03 (herstellereigene Bezeichnung) der Firma Krontec Maschinenbau GmbH, erlauben es, ein Lenkrad schnell und ohne Zuhilfenahme von Werkzeugen in einem Fahrzeug mechanisch zu befestigen oder zu demontieren.

Nachteiligerweise kann bei bekannten Systemen eine ebenfalls vorhandene elektrische Steckverbindung bei unachtsamer Handhabung, insbesondere einem nicht korrekten Ansetzen der Kupplungsteile, beschädigt werden.

Zudem ist bei bekannten Systemen eine unachtsame Handhabung in Form einer nicht korrekten Positionierung, insbesondere Orientierung der Kupplungsteile zueinander, möglich, so dass eine Korrektur durch ein erneutes Ansetzen zusätzliche Zeit benötigt, was gerade im Rennsportbereich, insbesondere während eines Rennens, aus naheliegenden Gründen unerwünscht ist.

Im Extremfall ist es sogar möglich, bei falscher Orientierung eine vermeintliche mechanische Verbindung herzustellen, die zwar nicht einrastet, aber das Lenkrad kurzzeitig zu fixieren scheint, so dass der Benutzer dies in Stresssituationen übersehen kann. Schlimmstenfalls kann sich das Lenkrad während der Fahrt lösen und einen Unfall verursachen.

Das Dokument DE 10 2015 219645 A1 offenbart die Merkmale des Oberbegriffs des unabhängigen Anspruchs, während die Dokumente US 2013/0118297 A1 und EP 1 179 469 A1 weitere Kupplungssysteme für ein Lenkrad zeigen.

Der vorliegenden Erfindung liegt daher die Aufgabe zugrunde, ein Schnellkupplungssystem für ein Fahrzeuglenkrad zu schaffen, das die vorstehend erläuterten Probleme vermeidet, eine schnelle zuverlässige Montage und Demontage eines Lenkrads ermöglicht und einen unerwünschten Zeitverlust, insbesondere bei der Montage, verhindert.

Diese Aufgabe wird erfindungsgemäß durch ein Schnellkupplungssystem für ein Fahrzeuglenkrad mit den Merkmalen des Schutzanspruchs 1 gelöst.

Zueinander komplementär ausgebildete Eingriffselemente, die sowohl am fahrzeugseitigen Kupplungsteil als auch am lenkradseitigen Kupplungsteil jeweils wenigstens im vorderen des ineinander in Eingriff zu bringenden Bereichs angeordnet sind, wirken derart zusammen, dass auch bereits ein teilweises Ineinanderschieben in Richtung der Längsachse in nicht korrekter Orientierung (Drehposition um Längsachse und Längsachsposition zueinander) verhindert wird.

Im Sinne der Erfindung ist unter Verhindern eines (teilweisen) Ineinanderschiebens eine über eine allenfalls geringe Eingriffstiefe (also eine im Vergleich zur gesamten Einschubtiefe geringe Eingriffstiefe von weniger als einem Fünftel oder gar ein Zehntel der gesamten Einschubtiefe) hinausgehende Wirkung zu verstehen, so dass beispielsweise eine Hilfe zum korrekten Ansetzen der Stirnseiten der Kupplungsteile und ein entsprechendes geringes Überlappen in längsaxialer Richtung, bei der insbesondere die korrekte Drehposition zueinander unbeachtlich ist, nicht als teilweises Ineinanderschieben anzusehen ist.

Hierdurch kann vorteilhafterweise bereits beim Ansetzen verhindert werden, dass eine verdrehte Position der Kupplungsteile zueinander doch zu einem Ineinanderschieben bis zu einer im Vergleich zur endgültigen Eindringtiefe (bei korrekter Positionierung der Kupplungsteile zueinander) bis über eine vorgenannte geringe Eindringtiefe hinaus erfolgen kann.

Hierdurch lässt es sich auch vermeiden, dass sich die Kupplungsteile bei einem Ineinanderschieben bei verdrehter Lage verklemmen oder die Kupplungsteile gar mechanisch beschädigt werden. Da durch die erfindungsgemäße Lösung eine inkorrekte Montage bereits zu einem frühen Zeitpunkt verhindert wird, entfällt auch eine unter Zeitdruck unerwünschte und unnötige Demontage nicht korrekt positionierter Kupplungsteile.

Zudem sind Beschädigungen von elektrischen Kontakten, sofern vorhanden, inkl. der Folgen einer falschen Kontaktierung ausgeschlossen.

In bevorzugter Ausgestaltung sind die Eingriffselemente in Form eines nicht rotationssymmetrischen Außenumfangs und eines hierzu komplementären Innenumfangs ausgebildet. Im Profil können die Umfänge beispielsweise unregelmäßige Formen besitzen, die ein Ineinanderschieben nur in einer eindeutigen Drehposition zueinander ermöglichen. Selbstverständlich ist es auch denkbar, achssymmetrische oder gar rotationssymmetrische Profile mit Ausnehmungen und/oder Vorsprüngen zu versehen, die ebenfalls ein Ineinanderschieben nur in einer eindeutigen Drehposition zueinander ermöglichen.

Erfindungsgemäß sind die miteinanderwirkenden Profile derart ausgebildet, dass sie als Ansetz- und Einführhilfe eine Toleranz in Form eines Abstandes zwischen den entsprechenden Flächen aufweisen, so dass sie ein geringes Verdrehen der Drehposition und/oder einen Abstand der Längsachsen in Form eines Spiels zulassen. Dieses anfängliche Spiel im Versatz der Längsachsen und/oder der Drehposition der Kupplungsteile nimmt mit der Eindringtiefe, vorzugsweise durch entsprechende Verkleinerung des Innenumfangs bzw. Vergrößerung des Außenumfangs und/oder Verbreiterung oder Verkleinerung der Eingriffselemente, ab, so dass die Kupplungsteile in Drehposition und/oder Längsposition sich selbsttätig in die korrekte Lage fügen (Zentrierhilfe).

Erfindungsgemäß weist das Schnellkupplungssystem elektrische Verbindungselemente vorzugsweise in Form von Steckkontakten auf, die im montierten Zustand eine elektrische Verbindung herstellen.

Das erfindungsgemäße Schnellkupplungssystem beinhaltet in dieser Ausgestaltung neben einer mechanischen Verbindung zur Kraftübertragung vorzugsweise eine elektrische Verbindung zur Übertragung von Signalen vom Lenkrad zum Fahrzeug bzw. zur sogenannten wheel base eines Spiel- oder Simulatorsystems und umgekehrt.

Die elektrischen Verbindungselemente sind soweit im jeweils hinteren Bereiche der Kupplungsteile angeordnet, dass die elektrischen Verbindungselemente bei der Montage der Kupplungsteile (Ineinanderstecken /-fügen) erst in Verbindung kommen, wenn sowohl die korrekte Orientierung bezüglich der längsaxialen Drehposition, als auch eine konzentrische Positionierung hinsichtlich der Ausrichtung der Längsmittelachsen vorliegt. Eine falsche Kontaktierung wird hierdurch ebenso ausgeschlossen wie eine Beschädigung der Kontakte.

In bevorzugter Ausgestaltung der Erfindung ist die Einführhilfe in Form von Nut- und Federelement ausgebildet, wobei das Nutelement zum rückwärtigen Bereich hin eine geringer werdende Breite oder das Federelement eine sich vergrößernde Breite aufweist, um das Federelement beim Einführen zu zentrieren und korrekt zu positionieren.

Das erfindungsgemäße Schnellkupplungssystem kann für ein Fahrzeug, für einen Simulator oder für eine Spielkonsole bzw. für ein entsprechendes Lenkrad verwendet werden.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine perspektivische Ansicht auf ein lenkradseitiges Kupplungsteil eines Schnellkupplungssystems nach der Erfindung;
- Fig. 2: eine perspektivische Ansicht auf ein fahrzeugseitiges Kupplungsteil eines Schnellkupplungssystems nach der Erfindung;
- Fig. 3: eine Schnittansicht A-A des lenkradseitigen Kupplungsteil nach Fig. 1 und eine Schnittansicht B-B des fahrzeugseitigen Kupplungsteils nach Fig. 2 kurz bevor die Kupplungsteile nach Fig. 1 und Fig. 2 bei korrekter Orientierung zueinander ineinander geschoben werden:
- Fig. 4: eine Schnittansicht nach Fig. 3, bei der die Kupplungsteile nach Fig. 1 und Fig. 2 bereits zu einem Teil ineinander geschoben sind;
- Fig. 5: eine Schnittansicht nach Fig. 3 und Fig. 4, bei der die Kupplungsteile nach Fig. 1 und Fig. 2 bereits zu einem größeren Teil ineinander geschoben sind, aber noch keine Kontaktierung der elektrischen Verbindungselemente vorliegt:
- Fig. 6: eine Schnittansicht nach Fig. 3, Fig. 4 und Fig. 5, bei dem die Kupplungsteile nach Fig. 1 und Fig. 2 vollends ineinander geschoben sind und
- Fig. 7: eine Schnittansicht analog Fig. 3 bei einer nicht korrekten Orientierung der Kupplungsteile zueinander.

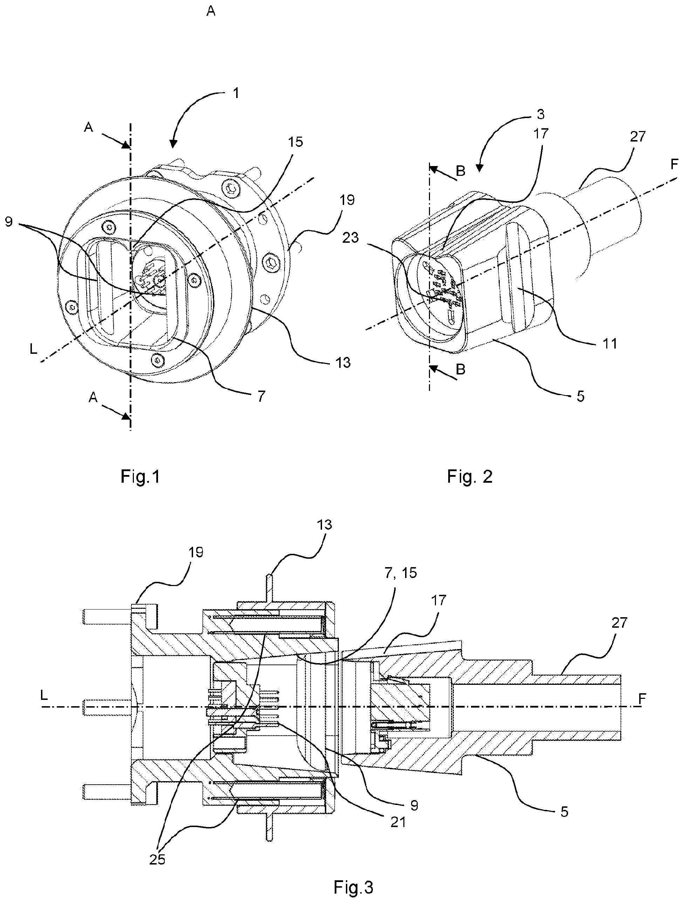

Das in Fig. 1 dargestellte lenkradseitige Kupplungsteil 1 weist ab seiner Vorderseite eine Aufnahme 7 in Form einer rechteckigen Öffnung. In diese Öffnung 7 kann das in Fig. 2 dargestellte fahrzeugseitige Kupplungsteil 3 mit seinem Kopf 5 eingeschoben werden.

An seiner Rückseite weist das lenkradseitige Kupplungsteil 1 eine Befestigung 19 in Form eines Flansches für ein in der Zeichnung nicht dargestelltes Lenkrad auf.

Wie aus Fig. 2 ersichtlich, besitzt der Kopf 5 des Kupplungsteils 3 ein im Wesentlichen rechteckiges Profil, das konisch bzw. sich zum vorderen Ende verjüngend ausgebildet ist. An seiner Rückseite ist das Kupplungsteil orts- und drehfest mit einer Lenksäule 27 eines Fahrzeuges oder einer wheel box eines Simulator- oder Spielsystems verbunden.

Wie aus Fig. 3 ersichtlich, ist die Öffnung bzw. Aufnahme 7 im Profil komplementär zum Kopf 5 ausgebildet und verjüngt sich in Richtung ihrer Tiefe.

Wird der Kopf 5 in korrekter Orientierung in die Aufnahme 7 zur Gänze eingeschoben, greifen Stäbe 9 in am Außenumfang des Kopfes 5 ausgebildete Längsnuten 11 ein, so dass die mechanische Verbindung der Kupplungsteile in dieser Position verriegelt ist.

Um die Stäbe 9 in radialer Richtung nach außen beweglich freizugeben, kann eine am Kupplungsteil 1 angeordnete Hülse 13 gegen eine Federkraft (Federn 25) in axialer Richtung zurückgezogen werden und der Kopf 5 aus der Aufnahme 7 herausgezogen werden.

Um eine korrekte Orientierung beim Ineinanderschieben der Kupplungsteile 1 und 3 zu gewährleisten, weist der Kopf 5 wenigsten an einer Stelle im Profil ein Eingriffselement 15, beispielsweise in Form einer Ausnehmung 17, auf. Komplementär hierzu weist die Aufnahme 7 im Profil ein Eingriffselement 15, beispielsweise in Form eines Vorsprungs, auf.

Bei einem Ineinanderschieben der Kupplungsteile 1 und 3 greifen die Eingriffselemente 15 und 17 derart, beispielsweise in Form von Nut und Feder, ineinander, so dass eine korrekte Orientierung der axialen Drehposition bereits beim ersten Ineinanderschieben bis zur kompletten Montage gewährleistet wird.

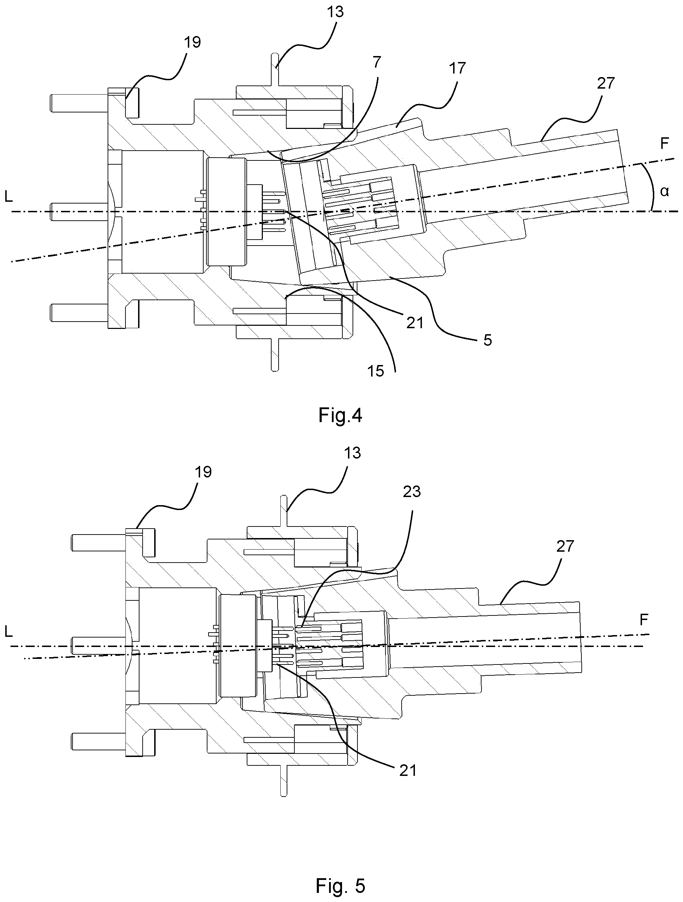

Wie aus Fig. 4 ersichtlich, ist eine parallele oder gar konzentrischen Lage der Längsachsen L und F der Kupplungsteile 1 und 3 nicht erforderlich, da ein zwischen Außenumfang des Kopfes 5 und Aufnahme 7 vorhandenes Spiel auch eine Schrägstellung der Kupplungsteile 1 und 3 zueinander erlaubt, so dass ein Winkel α von bis zu 25°, vorzugsweise bis zu 15° zwischen Achsen L und F möglich ist, ohne dass hierdurch ein Ineinanderschieben verhindert wird.

Durch das abhängig von der Einschubtiefe geringer werdende Spiel zentriert sich der Kopf 5 in der Aufnahme 7 selbsttätig, so dass der Winkel α immer kleiner wird und in der Endlage einer kompletten Montage zu Null wird.

Durch das Zusammenwirken der Eingriffselemente wird daher bereits beim Ansetzen die korrekte Orientierung der Kupplungsteile 1 und 3 zueinander und für ein Ineinanderschieben gewährleistet, und damit ein Ineinanderschieben in nicht korrekter Orientierung verhindert bzw. eine fehlerhafte Orientierung gleich zu Beginn der Montage bemerkt.

Weiterhin wirkt ein vorzugsweise vorhandenes Spiel (beispielsweise die zueinander komplementäre konische Ausbildung von Kopf 5 und Aufnahme 7), das sich beim Einschieben verringert als Einführ- und Zentrierhilfe, um eine korrekte Endlage zu gewährleisten.

Wie aus Fig. 5 ersichtlich, kann durch entsprechende Verringerung des Spiels auch eine einwandfreie elektrische Kontaktierung der Steckkontakte 21 und 23 ermöglicht werden. Das Spiel und damit der Winkel α ist in dieser Einschubtiefe so gering, dass bei einem weiteren Einschieben die Kontakte 21 und 23 selbsttätig lagerichtig ineinandergreifen.

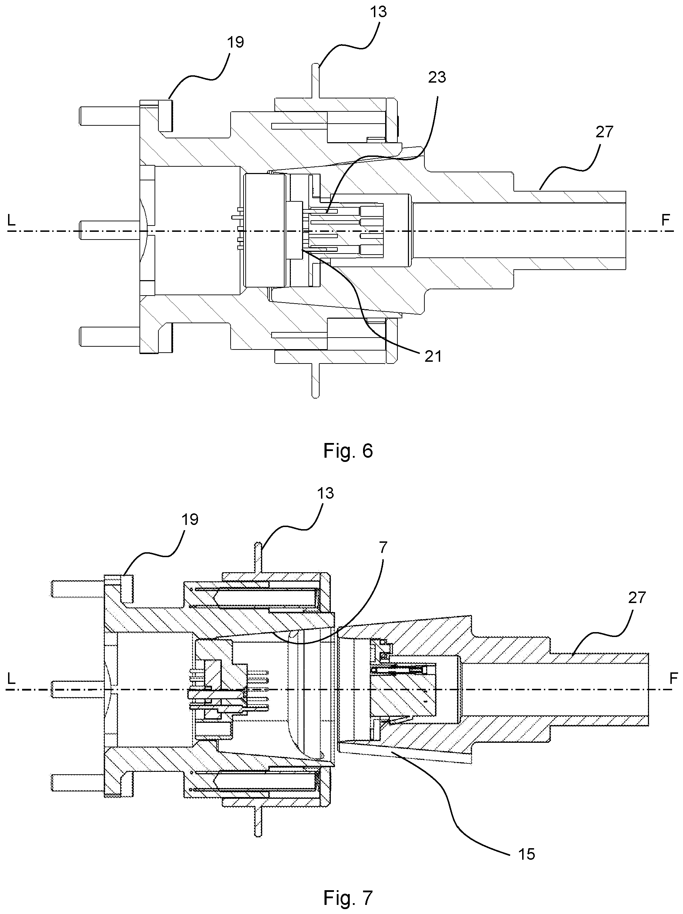

Die Kontakte 21 des Kupplungsteils 1 sind hierbei, wie in Fig. 1 und Fig. 3 bis Fig. 7 soweit im Inneren, vorzugsweis im Bereich des Bodens der Aufnahme 7 angeordnet, so dass sie erst zu einem späten Zeitpunkt in im Wesentlichen lagerichtiger Position, beispielsweise erst ab der Hälfte vorzugsweise 4/5 der kompletten Einschubtiefe mit den Kontakten 23, in Verbindung kommen.

Auf diese Weise wird einer mechanischen Beschädigung durch unachtsame Handhabung vorgebeugt. Zudem wird eine - schlimmstenfalls unbemerkte - nicht korrekte Montage (aber dennoch wenigstens temporäre kraft- oder formschlüssige Verbindung) verhindert, ohne dass hierdurch ein Zeitverlust bei Montage oder Demontage des Schnellkupplungssystems auftritt.

Die Funktionsweise des erfindungsgemäßen Schnellkupplungssystems wird im Folgenden kurz beschrieben:
Bei der Montage werden durch ein Zurückziehen der Hülse 13 die (Klemm-)Stäbe 9 zur Seite geschoben und der Kopf 5 kann in die Aufnahme 7 eingesetzt werden.

Das Querschnittsprofil ist, wie oben erläutert, ähnlich einem einfachen Schlüssel-Schloss-System gestaltet, so dass die Kupplungsteile 1 und 3 nur dann ineinandergeschoben werden können bzw. der Kopf in die Aufnahme 7 nur dann eingesetzt werden kann, wenn die Orientierung richtig ist.

Wird dies in anderer Orientierung, z.B. unter 90° oder 180° versucht, ist die mögliche Stecktiefe so gering, dass keine Verbindung zu Stande kommen kann und dies dem Benutzer auch in Stresssituationen sofort klar wird.

Das Längsprofil verläuft konisch, damit - je weiter der Kopf 5 in die Aufnahme 7 eingeführt wird - sich vor allem das radiale Spiel verkleinert. Der Kontakt der elektrischen Steckverbindung 21, 23 kommt erst dann zu Stande, wenn Stifte 21 und Buchsen 23 sich genau gegenüberliegen. Auf die Art werden mechanische Beschädigungen an den Steckkontakten 21, 23 verhindert.

Wird nun die Hülse 13 losgelassen, wird sie von den Federn 25 in die Ausgangslage zurückgedrückt, wobei die Klemmstäbe 9 in die entsprechenden Vertiefungen bzw. Nuten 11 des Kupplungsteils 3 (Kopf 5) eintauchen, jedoch vorzugsweise nicht den Grund berühren und deshalb das System unter Spannung bleibt.

Durch die bevorzugte Ausführung der Nuten 11 als Schrägen findet eine Kraftübersetzung statt, durch die die Klemmkraft zwischen den Kupplungsteilen 1 und 3 um ein Vielfaches höher ist als die Kraft der verwendeten Federn 25. Auf diese Weise bleibt die Verbindung möglichst spielarm.

### Bezugszeichenliste:

- 1: Kupplungsteil lenkradseitig (Buchse)
- 3: Kupplungsteil fahrzeugseitig (Stecker)
- 5: Kopf von 3
- 7: Aufnahme von 1
- 9: (Klemm-)Stäbe (Verriegelung)
- 11: Nuten für Stäbe 9
- 13: Hülse (axial beweglich mit Feder vorgespannt)
- 15: Eingriffselement (Feder bzw. Nase/Vorsprung)
- 17: Eingriffselement (Nut) für 15
- 19: Befestigung für Lenkrad
- 21: Steckkontakte (Stecker)
- 23: Steckkontakte (Buchsen)
- 25: Federn
- 27: Lenksäule
- L: Längsachse des Kupplungsteils 1
- F: Längsachse des Kupplungsteils 3
- α: Winkel zwischen Mittellängsachsen L und F

## Patentansprüche

1. Schnellkupplungssystem für ein Lenkrad, insbesondere für Rennsportfahrzeuge, mit einem lenkradseitigen Kupplungsteil (1) und einem fahrzeugseitigen Kupplungsteil (3), welche im montierten Zustand mechanisch formschlüssig ineinandergreifen,
das fahrzeugseitige Kupplungsteil (3) wenigstens ein Eingriffselement (17) und das lenkradseitige Kupplungsteil (1) ein hierzu komplementäres Element (15) aufweisen, die nur bei korrekter Orientierung bezüglich der längsaxialen Drehposition in Eingriff kommen und die Kupplungsteile (1, 3) in Richtung der Längsachse ineinandergeschoben werden können,
**dadurch gekennzeichnet, dass**
das Schnellkupplungssystem elektrische Verbindungselemente (21, 23) aufweist, die im montierten Zustand eine elektrische Verbindung herstellen, wobei die elektrischen Verbindungselemente (21, 23) soweit im hinteren Bereich des Kupplungsteils (1) und/oder des Kupplungsteils (3) angeordnet sind, dass die elektrischen Verbindungselemente (21, 23) bei der Montage der Kupplungsteile (1, 3) erst in Verbindung kommen, wenn sowohl die korrekte Orientierung bezüglich der längsaxialen Drehposition als auch eine konzentrische Positionierung hinsichtlich der Ausrichtung der Längsmittelachsen (L, F) vorliegt, wenigstens im vordersten der ineinander in Eingriff zu bringenden Bereiche wenigstens eines Kupplungsteils (1, 3) eine Einführhilfe und/oder Zentrierungshilfe angeordnet ist und
die Einführhilfe und/oder Zentrierungshilfe in Form wenigstens eines sich einer in Richtung der Längsachse zum vorderen Bereich hin verjüngenden oder erweiternden Kupplungsteils (3) ausgebildet ist,
wobei die Eingriffselemente (15, 17) jeweils wenigstens im vorderen der ineinander in Eingriff zu bringenden Bereiche der Kupplungsteile (1, 3) angeordnet sind und derart zusammenwirken, dass bereits ein teilweises Ineinanderschieben in nicht korrekter Orientierung verhindert wird.

2. Schnellkupplungssystem nach Anspruch 1, **dadurch gekennzeichnet, dass** die Eingriffselemente (15, 17) in Form eines nicht rotationssymmetrischen Außenumfangs und eines hierzu komplementären Innenumfangs ausgebildet sind.

3. Schnellkupplungssystem nach Anspruch 1 oder 2, **dadurch gekennzeichnet, dass** die elektrischen Verbindungselemente (21, 23) als Steckkontakte ausgebildet sind.

4. Schnellkupplungssystem nach einem der vorhergehenden Ansprüche, **dadurch gekennzeichnet, dass** die Einführhilfe in Form eines Nutelements (17) und eines Federelements (15) ausgebildet ist, wobei das Nutelement (17) zum rückwärtigen Bereich hin eine geringer werdende Breite oder das Federelement (15) eine sich vergrößernde Breite aufweist, um das Federelement (15) beim Einführen zu zentrieren und korrekt zu positionieren.

5. Verwendung eines Schnellkupplungssystems nach einem der vorhergehenden Ansprüche für ein Fahrzeug, für einen Simulator oder für eine Spielkonsole.

## Claims

1. Quick-release coupling system for a steering wheel, in particular for racing vehicles, having a steering wheel-side coupling part (1) and a vehicle-side coupling part (3), which in the assembled state engage in each other in a mechanically positive-locking manner,
the vehicle-side coupling part (3) has at least one engagement element (17) and the steering wheel-side coupling part (1) has an element (15) which is complementary to the said engagement element, the said engagement element and element (15) coming into engagement only when correctly oriented with respect to the longitudinal-axis rotational position, and the coupling parts (1, 3) can be pushed into one another in the direction of the longitudinal axis,
**characterized in that**
the quick-release coupling system has electrical connecting elements (21, 23) which produce an electrical connection in the assembled state, the electrical connecting elements (21, 23) being arranged in the rear region of the coupling part (1) and/or of the coupling part (3) that the electrical connecting elements (21, 23) do not come into contact until both the correct orientation with respect to the longitudinally axial rotational position and concentric positioning with respect to the alignment of the longitudinal center axes (L, F) are present when the coupling parts (1, 3) are mounted,
at least in the foremost of the regions, which are to be engaged in one another, of at least one coupling part (1, 3), an insertion aid and/or centering aid is/are arranged, and
the insertion aid and/or centering aid is/are designed in the form of at least one coupling part (3) which tapers or widens in the direction of the longitudinal axis towards the front region,
wherein the engagement elements (15, 17) are each arranged at least in the front of the regions of the coupling parts (1, 3) to be engaged with each other and cooperate in such a way that even a partial insertion in the wrong orientation is prevented.

2. Quick-release coupling system according to claim 1, **characterized in that** the engagement elements (15, 17) are designed in the form of a non-rotationally symmetrical outer circumference and an inner circumference complementary thereto.

3. Quick-release coupling system according to claim 1 or 2, **characterized in that** the electrical connecting elements (21, 23) are designed as plug contacts.

4. Quick-release coupling system according to one of the preceding claims, **characterized in that** the insertion aid is designed in the form of a groove element (17) and a spring element (15), the groove element (17) becomes narrower towards the rear area or the spring element (15) becomes wider in order to center the spring element (15) during insertion and to position it correctly.

5. Use of a quick-release coupling system according to one of the preceding claims for a vehicle, for a simulator or for a game console.

## Revendications

1. Système d'accouplement rapide pour un volant, en particulier pour des véhicules de course, avec une pièce d'accouplement (1) côté volant et une pièce d'accouplement (3) côté véhicule qui, à l'état assemblé, s'emboîtent mécaniquement par engagement de forme,
la pièce d'accouplement côté véhicule (3) présentant au moins un élément d'engagement (17) et la pièce d'accouplement côté volant (1) présentant un élément complémentaire (15) correspondant, lesdits éléments ne s'engageant que lors d'une orientation correcte par rapport à la position de rotation autour de l'axe longitudinal, et les pièces d'accouplement (1, 3) pouvant être poussées l'une dans l'autre en direction de l'axe longitudinal,
**caractérisé en ce que**
le système d'accouplement rapide comporte des éléments de connexion électrique (21, 23) qui établissent une connexion électrique à l'état assemblé, dans lequel les éléments de connexion électrique (21, 23) sont agencés dans la zone arrière de la pièce d'accouplement (1) et/ou de la pièce d'accouplement (3) de telle sorte que les éléments de connexion électrique (21, 23) n'entrent en contact lors du montage des pièces d'accouplement (1, 3) que lors d'une orientation correcte par rapport à la position de rotation autour de l'axe longitudinal ainsi que d'un positionnement concentrique par rapport à l'alignement des axes centraux longitudinaux (L, F), une aide à l'insertion et/ou une aide au centrage est agencée au moins dans la zone la plus avant des zones à engager mutuellement d'au moins une pièce d'accouplement (1, 3), et l'aide à l'insertion et/ou l'aide au centrage sont réalisées sous la forme d'au moins une pièce d'accouplement (3) qui se rétrécit ou s'élargit vers la zone avant en direction de l'axe longitudinal,
dans lequel les éléments d'engagement (15, 17) sont agencés chacun au moins à l'avant des zones à engager mutuellement des pièces d'accouplement (1, 3) et coopèrent de manière à empêcher une insertion mutuelle partielle dans une orientation incorrecte.

2. Système d'accouplement rapide selon la revendication 1, **caractérisé en ce que** les éléments d'engagement (15, 17) sont réalisés sous la forme d'une circonférence externe non symétrique en rotation et d'une circonférence interne complémentaire correspondante.

3. Système d'accouplement rapide selon la revendication 1 ou 2, **caractérisé en ce que** les éléments de connexion électrique (21, 23) sont réalisés sous forme de contacts enfichables.

4. Système d'accouplement rapide selon l'une des revendications précédentes, **caractérisé en ce que** l'aide à l'insertion est réalisée sous la forme d'un élément de rainure (17) et d'un élément de ressort (15), dans lequel l'élément de rainure (17) a une largeur décroissante vers la zone arrière ou l'élément de ressort (15) a une largeur croissante afin de centrer et de positionner correctement l'élément de ressort (15) lors de l'insertion.

5. Utilisation d'un système d'accouplement rapide selon l'une des revendications précédentes pour un véhicule, pour un simulateur ou pour une console de jeux.
